# EUROPEAN PATENT APPLICATION

(11) **EP 2 644 456 A1**
(43) Date of publication of application: **02.10.2013**
(21) Application number: 11843671.6
(22) Date of filing: 10.06.2011
(51) Int. Cl.: B60R 16/02, H02G 11/00

(54) **WIRE HARNESS CABLE ROUTING STRUCTURE AND PROTECTOR**

(30) Priority: 26.11.2010 JP 2010263495
(71) Applicant: Sumitomo Wiring Systems, Ltd., Yokkaichi-shi, Mie 510-0058 (JP)
(72) Inventor: NAGAYASU Daiki, Yokkaichi-shi Mie 510-0058 (JP); SAKATA Tsutomu, Yokkaichi-shi Mie 510-0058 (JP)
(74) Representative: Müller-Boré & Partner Patentanwälte
(86) International application number: PCT/JP2011/063372
(87) International publication number: WO 2012/070268

(57) **Abstract**

A wire harness cable routing structure includes a wire harness; an outer sheathing member sheathing the wire harness; an attachment member attachable to the vehicle body, a first end of the outer sheathing member being fixated to the attachment member; and an accommodator capable of installation within the door and capable of accommodating the wire harness extending out from a second end of the outer sheathing member such that a surplus length of the wire harness can be absorbed by bending between a first route and a second route, the second route expanded so as to separate from the first route. The accommodator includes an accommodating mouth allowing the wire harness to be inserted into an interior of the accommodator such that the wire harness can be advanced and withdrawn and an extraction mouth allowing the accommodated wire harness to be extracted outward. The accommodator is formed such that the accommodating mouth and the extraction mouth occupy a positional relationship offset in an interior-exterior direction of the door, the accommodating mouth and the extraction mouth being installed in the door.

## Description

### FIELD OF THE INVENTION

The present invention relates to a technology routing a wire harness between a vehicle body and a door.

### BACKGROUND OF THE INVENTION

Patent Literature 1 discloses a wire harness cable routing structure in which a wire harness is inserted through a tube to bridge a space between a vehicle body and a door. More specifically, in Patent Literature 1, a tube is slidably accommodated in a guide provided to a door module panel. In addition, a surplus length of the wire harness drawn out from the tube is accommodated in a surplus length absorbing space provided to the guide. The guide has a shallow, substantially triangular shape and includes a top peripheral wall having a substantially straight-line shape and a pair of side peripheral walls curving and approaching downward. The surplus length absorbing space is a gently curved space having a large diameter curving toward a corner of the top peripheral wall and the forward side peripheral wall. In addition, when the door is in an open state, the wire harness is drawn out and the surplus length enters a sloping state. When the door is in a closed state, the wire harness is drawn into the guide and the surplus length is accommodated by curving along the corner side. Thereby, the surplus length of the wire harness is accommodated.

### RELATED ART

### Patent Literature

Patent Literature 1: Japanese Patent Laid-open Publication No. H2007-76620

### SUMMARY OF THE INVENTION

### Problems to Be Solved by the Invention

However, in Patent Literature 1, during an act of closing the door, the surplus length is accommodated due to the wire harness being drawn into the guide and the surplus length partially curving. Therefore, the wire harness is bent in that portion each time the door is opened and closed. Accordingly, bending stress concentrates on the bent portion and is readily applied thereto.

Thus, the present invention has as an object to disperse stress applied to the wire harness when absorbing the surplus length.

### Means for Solving the Problems

A wire harness cable routing structure according to a first aspect routes a wire harness between a vehicle body and a door and includes a wire harness; an outer sheathing member sheathing a portion of the wire harness including a portion bridging a space between the vehicle body and the door; an attachment member attachable to the vehicle body, a first end of the outer sheathing member being fixated to the attachment member; and an accommodator capable of installation within the door and capable of accommodating the wire harness extending out from a second end of the outer sheathing member such that a surplus length of the wire harness can be absorbed by bending between a first route and a second route, the second route expanded so as to separate from the first route. The accommodator includes an accommodating mouth allowing the wire harness to be inserted into an interior of the accommodator such that the wire harness can be advanced and withdrawn; and an extraction mouth allowing the accommodated wire harness to be extracted outward. The accommodator is formed such that the accommodating mouth and the extraction mouth occupy a positional relationship offset in an interior-exterior direction of the door, the accommodating mouth and the extraction mouth being installed in the door.

The wire harness cable routing structure according to a second aspect is the wire harness cable routing structure according to the first aspect, in which the accommodator is formed in a shape where the accommodating mouth and the extraction mouth are orthogonal to each other. The accommodator includes a wall expanding so as to protrude away from the extraction mouth. The wire harness is accommodated along the wall on the second route.

The wire harness cable routing structure according to a third aspect is the wire harness cable routing structure according to either one of the first and second aspects including a guide formed in a trench shape or a tubular shape capable of installation within the door and extending such that the wire harness can be inserted into and guided through the guide toward the accommodator. The guide includes, on a first end, a clearance expanding in a direction of advance of the outer sheathing member accompanying an act of closing the door.

The wire harness cable routing structure according to a fourth aspect is the wire harness cable routing structure according to any one of the first through third aspects including the guide having the trench shape or the tubular shape capable of installation within the door and extending such that the wire harness can be inserted into and guided through the guide toward the accommodator. The first end of the guide is formed so as to widen toward the attachment member in at least the open state of the door.

A protector according to a fifth aspect is capable of accommodating the wire harness such that the surplus length of the wire harness can be absorbed by bending between the first route and the second route, the second route expanded so as to separate from the first route. The protector includes the accommodating mouth allowing the wire harness to be inserted into the interior of the protector such that the wire harness can be advanced and withdrawn; and the extraction mouth allowing the accommodated wire harness to be extracted outward. The protector is formed such that the accommodating mouth and the extraction mouth occupy a positional relationship offset in an inward direction of the door.

### Effect of the Invention

According to the wire harness cable routing structure of the first aspect, the accommodator is formed so as to accommodate the wire harness, routed between the vehicle body and the door, such that the surplus length of the wire harness can be absorbed by bending between the first route and the second route, the second route having a shape expanded so as to separate from the first route. Therefore, accompanying the act of opening and closing the door, the surplus length of the wire harness advancing and withdrawing within the door can be smoothly absorbed. In addition, the accommodator is formed such that the accommodating mouth and the extraction mouth occupy a positional relationship offset in the interior-exterior direction of the door, the accommodating mouth and the extraction mouth being installed in the door, the accommodating mouth allowing the wire harness to be inserted into an interior of the accommodator such that the wire harness can be advanced and withdrawn, and the extraction mouth allowing the accommodated wire harness to be extracted outward. Therefore, when absorbing the surplus length, the wire harness accommodated within the accommodator deforms in a torsional direction in addition to bending deformation. Thereby, during opening and closing of the door, the surplus length can be absorbed while dispersing stress applied to the wire harness advancing and withdrawin within the door.

According to the wire harness cable routing structure of the second aspect, the accommodator has a shape where the accommodating mouth and the extraction mouth are orthogonal to each other. Therefore, when the wire harness is advanced and withdrawn within the accommodator through the accommodating mouth, a portion of the wire harness extending in a direction orthogonal to the direction of advance and withdrawal from the extraction mouth becomes susceptible to torsion deformation. In addition, the wall has a shape expanding so as to protrude away from the extraction mouth. Accordingly, a greater length can be ensured for the portion of the wire harness extending in the direction orthogonal to the direction of advance and withdrawal from the extraction mouth and a range of deformation in the torsional direction can be broadened. Therefore, stress applied to the wire harness can be dispersed across a broader range.

According to the wire harness cable routing structure of the third aspect, the guide is formed so as to be capable of guiding the outer sheathing member toward the accommodator. Therefore, the outer sheathing member can be guided toward the accommodator more smoothly. In addition, the guide includes, on the first end, the clearance expanding in the direction of advance of the outer sheathing member accompanying the act of closing the door. Accordingly, a force with which the outer sheathing member slides over an interior surface of the guide is inhibited, thus contributing to inhibition of abnormal noise and enabling the outer sheathing member to be displaced more smoothly in advance and withdrawal.

According to the wire harness cable routing structure of the fourth aspect, the guide is formed so as to be capable of guiding the outer sheathing member toward the accommodator. Therefore, the outer sheathing member can be guided toward the accommodator more smoothly. In addition, the first end of the guide is formed so as to widen toward the attachment member in at least the open state of the door. Therefore, the wire harness can be more smoothly inserted and guided within the guide during the act of opening and closing the door.

According to the protector of the fifth aspect, the accommodator accommodates the wire harness, routed between the vehicle body and the door, such that the surplus length of the wire harness can be absorbed by bending between the first route and the second route, the second route expanded so as to separate from the first route. Therefore, the surplus length can be more smoothly absorbed. In addition, the accommodator is formed such that the accommodating mouth and the extraction mouth occupy a positional relationship offset in an inward direction, the accommodating mouth allowing the wire harness to be inserted into an interior of the accommodator such that the wire harness can be advanced and withdrawn and the extraction mouth allowing the accommodated wire harness to be extracted outward. Therefore, when absorbing the surplus length, the wire harness accommodated within the accommodator deforms in the torsional direction in addition to the bending deformation. Accordingly, the surplus length can be absorbed while dispersing the stress applied to the wire harness.

### BRIEF DESCRIPTION OF THE DRAWINGS

Fig. 1 illustrates a wire harness cable routing structure in a state where a door is open.
Fig. 2 illustrates the wire harness cable routing structure in a state where the door is closed.
Fig. 3 illustrates an attachment member.
Fig. 4 is a plan view of the wire harness cable routing structure in the state where the door is open.
Fig. 5 is a front view of a protector
Fig. 6 is a plan view of the protector.
Fig. 7 is a lateral view of the protector.
Fig. 8 is a plan view of a protector according to a modified example.

### MODE FOR CARRYING OUT THE INVENTION

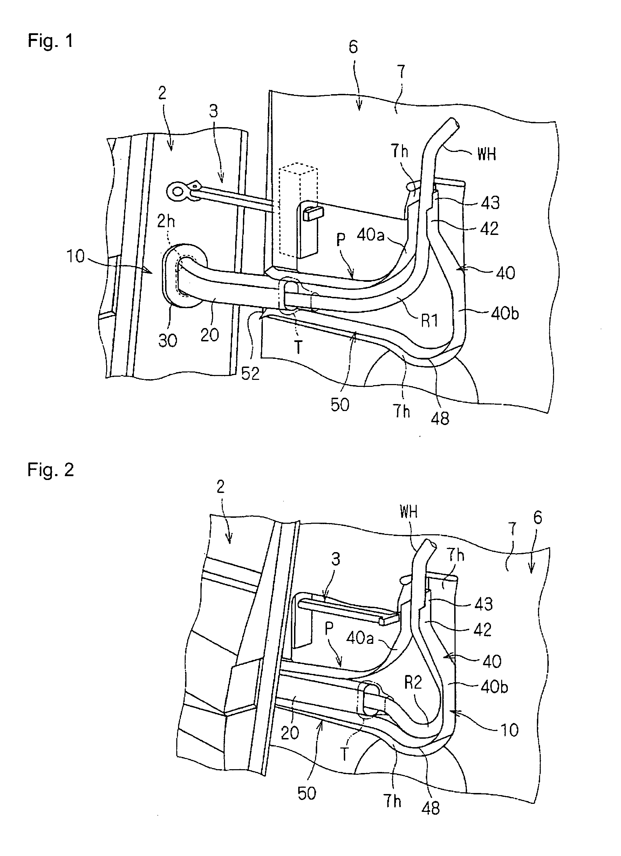

A wire harness cable routing structure 10 and a protector P according to an embodiment are described (see Figs. 1 and 2). The wire harness cable routing structure 10 routes a wire harness WH between a vehicle body 2 and a door 6 of an automobile. Herein, the vehicle body 2 refers to frame portions formed with metallic members.

The wire harness WH is configured by bundling a plurality of electric wires appropriately for a wiring route, the electric wires intended for power supply or signal transmission to electrical devices such as power windows, door locks, and speakers mounted in the door 6. Herein, a portion of the wire harness WH bridging a space between the vehicle body 2 and the door 6 is configured by bundling the plurality of electric wires into a single bundle. The wire harness WH is then branched within the door 6 and connected to the various electrical devices.

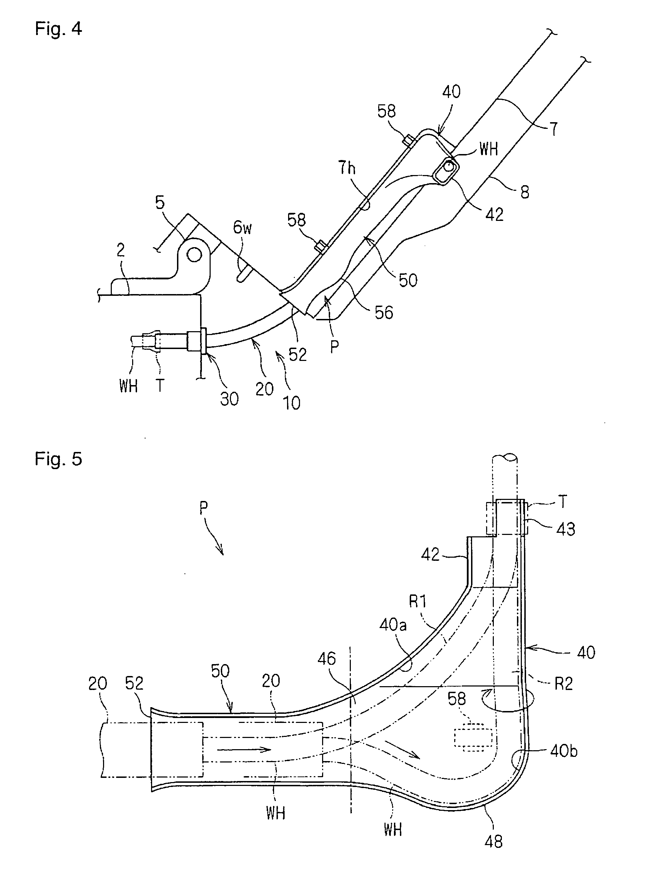

The door 6 is connected to the vehicle body 2 via a door hinge 5 and an open regulator 3 such that an exit/entrance formed in the vehicle body 2 can be opened and closed (see Figs. 1 and 4). Moreover, the open regulator 3 is omitted from Fig. 4. Herein, the door 6 is a front side door. For ease of description, the door 6 is connected to the vehicle body 2 so as to change position around an axis running in a perpendicular direction (rotation axis of the door hinge 5). Hereafter, regardless of whether the door 6 is in an open or closed position, a front-rear direction in the closed position is described as a front-rear direction of the door 6 in order to correspond to a front-rear direction of the vehicle body 2.

The open regulator 3 (also called a check link) is a structure intended to enable the door 6 to maintain a degree of openness (fully open position, half-open position, and the like). More specifically, the open regulator 3 includes an arm and a case. The arm is connected at a first end (hereafter, vehicle body connector) to the vehicle body 2 so as to be capable of relative rotation. The arm is formed in a pole shape having portions slenderer (more thin-walled in a vertical direction of the vehicle body) than other portions in a plurality of positions in a length direction. Moreover, thick and slender portions of the arm are omitted in Fig. 1. The case is formed in a housing shape having a through-hole through which the arm can be inserted. The case includes a pinch-grip (not shown in the drawings) which is pressure biased so as to pinch the arm on an interior of the case. Specifically, the case facilitates stopping of the inserted arm at a position where the pinch-grip pinches the slender portion of the arm. The case is fixated to the door.

In addition, in conjunction with the act of opening and closing the door 6, the arm is displaced so as to be relatively inserted with respect to the case. In a state where the pinch-grip pinches the slender portion of the arm in the case, the door 6 is capable of maintaining a position so long as no external force is applied which would surmount a thicker portion of the arm beside the slender portion. In general, positions for the slender portions of the arm are determined such that the position of the door 6 can be maintained at the half-open and fully open positions.

The door 6 also includes a weather strip 6w along a peripheral edge thereof to prevent water leakage (see Fig. 4). The weather strip 6w is formed with rubber or the like capable of retaining a watertight state on an interior and exterior of a vehicle cabin by forming a seal with an opening edge portion of the vehicle 2 in a state where the door 6 is closed. Moreover, Fig. 4 illustrates only the weather strip 6w provided to the door 6; however, a weather strip may also be provided to the opening edge of the exit/entrance on the vehicle body 2. Specifically, such a weather strip should be capable of forming a seal with the peripheral edge of the door 6.

The door 6 includes an inner door panel 7 and an outer door panel serving as an outer sheathing member provided to an exterior side of the inner door panel 7, the inner door panel 7 and the outer door panel formed of a metal material. The door 6 also includes a trim 8 formed of a resin material or the like and serving as an inner sheathing member attached to a cabin interior side of the inner door panel 7. The door 6 is configured so as to allow the wire harness WH to be inserted through a front end of the door 6 to the interior. Herein, a recessed portion 7h is formed on a front end portion of the inner door panel 7, the recessed portion 7h opening in the front end of the door 6. The wire harness WH is routed from the vehicle body 2 through the recessed portion 7h between the inner door panel 7 and the trim 8. Moreover, the recessed portion 7h is formed so as to be capable of accommodating the protector P, described hereafter.

On the opening edge of the exit/entrance in the vehicle body 2, which is opened and closed by the door 6, an aperture 2h is formed on a portion opposite to the front side opening of the recessed portion 7h when the door 6 is in the closed position (see Fig. 1). The wire harness WH is inserted through the aperture 2h into the vehicle body 2. Herein, the recessed portion 7h and the aperture 2h are formed so as to be opposite each other in the front-back direction of the vehicle body 2. Moreover, the recessed portion 7h and the aperture 2h are configured so as to be hidden by the vehicle body 2 and the door 6 when the door 6 is closed.

Herein, the wire harness WH is routed between the vehicle body 2 and the door 6 further toward the vehicle cabin interior than the weather strip 6w. Therefore, the front side opening of the recessed portion 7h and the aperture 2h are formed further toward the vehicle cabin interior than the weather strip 6w. When a plurality of weather strips are provided in an interior-exterior direction of the door 6, the weather strip 6w refers to the weather strip installed furthest outward from the vehicle cabin. The wire harness WH should be routed further toward the vehicle cabin interior than the weather strip 6w. Specifically, additional weather strips may be provided further toward the vehicle cabin interior than the wire harness WH, which is routed between the vehicle body 2 and the door 6.

The wire harness cable routing structure 10 includes the wire harness WH, the outer sheathing member 20, the attachment member 30, and the protector P (an accommodator 40 and a guide 50).

The outer sheathing member 20 sheathes an exterior of a portion of the wire harness WH including the portion bridging the space between the vehicle body 2 and the door 6. The outer sheathing member 20 protects the wire harness WH from the exterior and supports the wire harness WH by inhibiting sagging between the vehicle body 2 and the door 6.

The outer sheathing member 20 is formed in a tubular shape and protects the wire harness WH when the wire harness WH is inserted therein. More specifically, a member employed as the outer sheathing member 20 has flexibility (along an entire length direction thereof) to bend between the vehicle body 2 and the door 6 in response to the act of opening and closing the door 6. In addition, the member employed as the outer sheathing member 20 has rigidity capable of supporting the wire harness WH by inhibiting sagging between the vehicle body 2 and the door 6. Herein, the outer sheathing member 20 is a corrugated tube produced by extruding and blow molding or vacuum molding an elastomer such as a synthetic resin or a synthetic rubber. The outer sheathing member 20 is formed in a flat shape (e.g., a flat shape such as a substantially elliptical shape, a substantially rectangular shape, or the like as viewed in cross-section). Herein, the outer sheathing member 20 is formed in a substantially rectangular shape having rounded corners, as viewed in cross-section. Specifically, the outer sheathing member 20 has a shape which is unlikely to bend in a length direction and is likely to bend in a short direction (as viewed in cross-section). Moreover, the wire harness WH may be bundled in a flat shape as well, and the outer sheathing member 20 may be formed in a flat shape corresponding to an outer shape of the wire harness WH.

Tape T is wound around the first end of the outer sheathing member 20 to fixate the first end of the outer sheathing member 20 to the portion of the wire harness WH routed into the vehicle body 2. In addition, the first end of the outer sheathing member 20 is fixated to the attachment member 30 attached to the vehicle body 2. A second end of the outer sheathing member 20 is fixated to the portion of the wire harness WH routed into the door 6 (herein, routed into the guide 50, described hereafter) by winding the tape T around the second end of the outer sheathing member 20. In addition, the second end of the outer sheathing member 20 is capable of being displaced within the door 6 along with the wire harness WH.

The attachment member 30 is a member attaching the first end of the outer sheathing member 20 sheathing the wire harness WH to the vehicle body 2 so as to route the wire harness WH to the vehicle body 2. The first end of the outer sheathing member 20 is fixated by the attachment member 30, which is formed so as to be capable of attaching to the vehicle body 2. More specifically, the attachment member 30 is attached to the aperture 2h formed in the vehicle body 2. Herein, the aperture 2h is formed in a position below the vehicle body side connector of the open regulator 3 (i.e., the portion of the arm connected to the vehicle body 2). The attachment member 30 is capable of attaching to the aperture 2h in this position. In addition, the attachment member 30 is configured so as to be capable of attaching to the aperture 2h by being pressed against the aperture 2h.

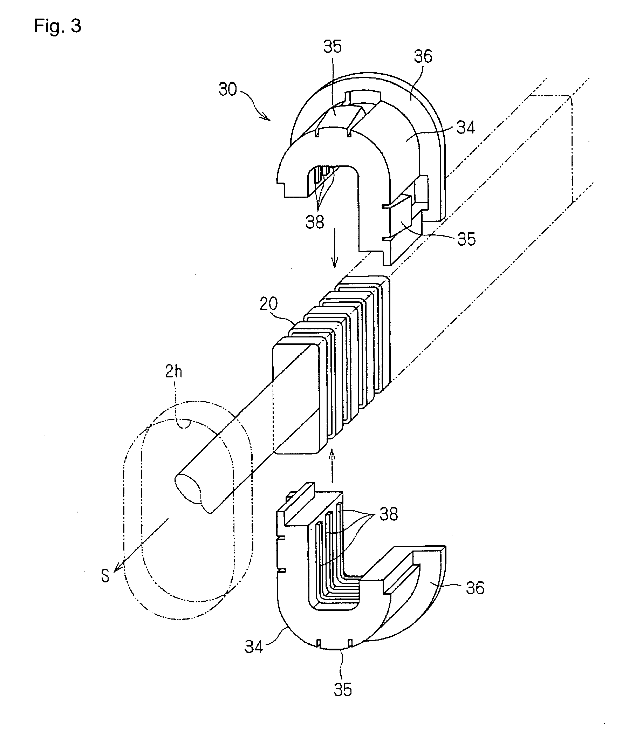

The attachment member 30 includes an insertion portion 34, a press portion 36, and a vehicle body engagement portion 38 (see Fig. 3).

The insertion portion 34 is formed in a tubular shape capable of being inserted into the aperture 2h on the vehicle body 2 and also capable of allowing the outer sheathing member 20 to be inserted through the interior of the insertion portion 34. Herein, the insertion portion 34 is inserted into the aperture 2h toward a front of the vehicle body 2 (hereafter, an insertion direction S). Tongues 35 are provided to foremost ends of the insertion portion 34, the tongues 35 being capable of latching to the aperture 2h in a state where the insertion portion 34 is inserted into the aperture 2h. The tongues 35 are formed so as to project toward an outer periphery of the insertion portion 34 from a plurality of positions (herein, four evenly spaced locations) in the peripheral direction of the insertion portion 34. The tongues 35 each include an engaging surface capable of contacting the peripheral edge of the aperture 2h from the front in the insertion direction S. More specifically, the tongues 35 are formed such that a projection amount increases gradually from the foremost end of the insertion portion 34 toward a base end. In addition, for each of the tongues 35, when the insertion portion 34 is inserted into the aperture 2h, the insertion portion 34 or the tongues 35 elastically deform toward an inner periphery of the insertion portion 34. Then, in a position where the aperture 2h has been passed, the insertion portion 34 or the tongues 35 are elastically restored toward the outer periphery to latch to the peripheral edge of the aperture 2h.

The press portion 36 is provided continuously on the base end of the insertion portion 34, and is formed in a flange shape fanning out on the outer periphery of the insertion portion 34. The press portion 36 is capable of surface contact with the peripheral edge of the aperture 2h from a back side in the insertion direction S. Specifically, the outer peripheral shape of the press portion 36 is formed to be larger than the aperture 2h.

In addition, when the insertion portion 34 is inserted into the aperture 2h, the tongues 35 latch to the peripheral edge of the aperture 2h from the front side in the insertion direction S and the press portion 36 makes surface contact with the peripheral edge of the aperture 2h from the back side in the insertion direction S. Thereby, the peripheral edge of the aperture 2h is pinched between the tongues 35 and the press portion 36. The attachment member 30 is thus fixated to the vehicle body 2.

The vehicle body engagement portion 38 is a portion capable of being positioned so as to not allow relative displacement in an extension direction with respect to the outer sheathing member 20, which is inserted through the insertion portion 34 (and the press portion 36). Herein, the vehicle body engagement portion 38 is formed so as to be capable of engaging with the uneven exterior shape of the corrugated tube used as the outer sheathing member 20. More specifically, the vehicle body engagement portion 38 is formed in a protruding condition along the peripheral direction projecting from the inner peripheral portion of the insertion portion 34 (and the press portion 36) toward the inner periphery. A plurality of vehicle body engagement portions 38 are provided in the insertion direction S at intervals corresponding to recessed portions on the outer sheathing member 20.

The attachment member 30 is configured by uniting a pair of substantially U-shaped members (herein, "U" shapes having opposing arms of different lengths). Herein, a projection and recession capable of engaging with each other are formed on each matching portion of the pair of substantially U-shaped members. The pair of substantially U-shaped members is united by engaging the projections and recessions. Specifically, by pinching the outer sheathing member 20 between the pair of substantially U-shaped members, the vehicle body engagement portion 38 is engaged to the outer periphery of the outer sheathing member 20 and the attachment member 30 is attached to the outer sheathing member 20 so as to not allow relative displacement in the extension direction. Moreover, the attachment member 30 preferably has a shape (not shown in the drawings) which latches so as to be incapable of separating in a state where the pair of substantially U-shaped members is united. However, the attachment member 30 may also maintain the united state by being engaged with the aperture 2h. In addition, the attachment member 30 may have the pair of substantially U-shaped members connected at one end by a hinge so as to be capable of opening and closing.

A pair of members may be produced separately by injection molding for the attachment member 30, in which a melted resin material is poured into a mold. In addition, when the pair of members is designed to have the same shape, both of the pair of members can be produced in one kind of mold and a reduction in equipment costs can be achieved.

In this way, using the attachment member 30 configured by uniting the pair of members, during a stage of attaching the wire harness cable routing structure 10 to a vehicle, adjustment of a position where the attachment member 30 is fixated to the outer sheathing member 20 can be readily performed.

However, the attachment member 30 is not limited to the above-described shape. For example, the vehicle body engagement portion may also be formed in a long, thin, flat rectangular shape projecting from the base end of the press portion 36 toward the back in the insertion direction S. Specifically, the outer sheathing member 20 inserted through the insertion portion 34 (and the press portion 36) is fixated to the vehicle body engagement portion by tightening with the wound tape T or a zip tie. Accordingly, the outer sheathing member 20 can be positioned with respect to the attachment member 30 in the insertion direction. Moreover, the zip tie refers to a member capable of incrementally adjusting to and holding a peripheral direction dimension of a circular body. When a positioning member of this kind is employed, the attachment member may also be integrally formed by injection molding.

The attachment member 30 may be capable of attaching to the vehicle body 2 and of fixating the outer sheathing member 20. The attachment member 30 is not limited to the molded resin article described above, but may also be a grommet formed with an elastomer such as a synthetic rubber.

The protector P includes the accommodator 40 and the guide 50 (see Figs. 4 to 7). The accommodator 40 is formed so as to be capable of accommodating the wire harness WH extending from the second end of the outer sheathing member 20 such that the surplus length of the wire harness WH can be absorbed. In addition, the guide 50 is formed in a trench shape or a tubular shape extending such that the second end of the outer sheathing member 20, which is a free end, can be inserted into and guided through the guide 50 toward the accommodator 40.

More specifically, the guide 50 includes a guide mouth 52 on a first end and is connected to a first end of the accommodator 40 on a second end. The guide mouth 52 allows the second end of the outer sheathing member 20 to be inserted therein. In addition, the accommodator 40 includes an accommodating mouth 46 on the first end, which is connected to the second end of the guide 50. The accommodator 40 also includes an accommodating space capable of accommodating the wire harness WH such that the surplus length of the wire harness WH is absorbed, the wire harness WH extending from the second end of the outer sheathing member 20 inserted into the guide 50. The accommodator 40 is formed such that the wire harness WH can be inserted through the accommodating mouth 46 and into the accommodating space such that the wire harness WH can be advanced and withdrawn. The accommodator 40 is also formed such that the wire harness WH can be drawn out from the accommodating space through an extraction mouth 42, separate from the accommodating mouth 46. Specifically, the protector P is configured such that the outer sheathing member 20 inserted into the guide 50 is guided toward the accommodator 40; the wire harness WH extending from the second end of the outer sheathing member 20 is inserted into the accommodating space of the accommodator 40 through the accommodating mouth 46; then the wire harness WH extends out (i.e., into the door 6) through the extraction mouth 42 while the wire harness WH is accommodated and the surplus length of the wire harness WH is absorbed within the accommodating space.

Hereafter, the protector P is described in greater detail, with a focus on the configurations of the guide 50 and the accommodator 40.

The guide 50 is formed in a tubular shape having an internal space larger than the outer sheathing member 20 (herein, a tubular shape having a substantially rectangular shape in cross-section with rounded corners, corresponding to a cross-sectional shape of the outer sheathing member 20). However, so long as the guide 50 is capable of allowing the outer sheathing member 20 to be inserted and guided therethrough, the guide 50 may be formed in a trench shape as well as in tubular shapes such as (as viewed in cross-section) a substantially elliptical shape, a circular shape, and polygonal shapes other than rectangular.

Herein, a relationship between the guide 50 and the outer sheathing member 20 is described (see Figs. 1, 2, 5, and 6). In a state where the outer sheathing member 20 is fixated to the attachment member 30, the first end of which is attached to the vehicle body 2, when the door 6 is in the open state, the outer sheathing member 20 should be defined to have an extension measurement long enough that at least a portion of the second end of the outer sheathing member 20 is inserted within the guide 50. Herein, in the open state of the door 6, the outer sheathing member 20 is defined to have a measurement such that the second end of the outer sheathing member 20 is positioned toward the side of the second end of the guide mouth 52 of the guide 50.

Meanwhile, when the door 6 is in the closed state, the guide 50 is defined to have an extension measurement long enough that the second end of the outer sheathing member 20 advanced to the interior of the guide 50 can be accommodated up to the second end of the guide 50. However, the guide 50 may be shorter than the above measurement and, in the closed state of the door 6, the second end of the outer sheathing member 20 may pass the second end of the guide 50 to project into the accommodator 40. However, the measurement of the guide 50 is preferably defined long enough to not interfere with the surplus length of the wire harness WH being absorbed within the accommodator 40, the wire harness WH extending from the second end of the outer sheathing member 20.

The guide 50 includes, on the first end, a clearance 56 expanding in a direction of advance of the outer sheathing member 20 during the act of closing the door 6. Herein, during the act of opening and closing the door 6, the outer sheathing member 20 is bent around the axis of the door hinge 5 between the vehicle body 2 and the door 6 (i.e., is bent so as to bulge toward the vehicle cabin interior; see Fig. 4). Therefore, during the act of opening and closing the door 6, the second end of the outer sheathing member 20 attempts to displace toward the vehicle cabin interior due to a force attempting to elastically restore the outer sheathing member 20. The guide 50 is formed so as to regulate the motion of the outer sheathing member 20 in a direction substantially orthogonal to the front-back direction of the door 6 accompanying the act of opening and closing the door 6.

When the portion of the outer sheathing member 20 inserted into the guide 50 attempts to displace toward the vehicle cabin interior, the portion of the outer sheathing member 20 may contact or, during the act of opening and closing the door 6, may rub against a vehicle cabin interior-side portion of an inner peripheral surface of the guide 50. Abnormal noises may thus be generated due to friction and the like. In particular, in a state where the door 6 is near the open position, in a location where the second end of the outer sheathing member 20 contacts the guide 50 (herein, the vehicle cabin interior-side portion in a position toward the side of the second end of the guide mouth 52), a force contacting the inner peripheral surface of the guide 50 can be anticipated to have a greater impact.

Thus, the clearance 56, where the peripheral wall of the guide 50 expands and retreats outward, is provided to the location on the guide 50 where the second end of the outer sheathing member 20 contacts the guide 50 in the state where the door 6 is near the open position. Herein, the clearance 56 is formed so as to expand toward the vehicle cabin interior in a position toward the side of the second end of the guide mouth 52. More specifically, the clearance 56 expands in a curve in a planar view. Preferably, the clearance 56 should be formed so as to expand at substantially the same curvature diameter as a bend radius of the outer sheathing member 20 (herein, the bend radius of an outer peripheral portion of the outer sheathing member), which is bent around the axis of the door hinge 5. Specifically, even inside the guide 50, the outer sheathing member 20 is preferably bent at substantially the same bend radius as when bent between the vehicle body 2 and the door 6. However, an amount of bulging and the shape of the clearance 56 should be determined in consideration of the shape of the door 6 (installation space and the like).

The guide mouth 52 formed on the first end of the guide 50 is formed so as to widen toward the attachment member 30 (herein, the vehicle cabin exterior side of the door 6) at least when the door 6 is in the open state. Herein, the guide 50 employs a shape widening in all directions substantially orthogonal to the extension direction. More specifically, the guide mouth 52 is formed so as to gradually widen toward the first end. In addition, a portion on the vehicle cabin exterior side of the opening edge of the guide mouth 52 is open wider than other portions of the opening edge. In a planar view, this portion should be set to a curvature diameter smaller than the bend radius of the outer sheathing member 20 (herein, the bend radius of the inner peripheral portion of the outer sheathing member). Specifically, the outer sheathing member 20 is bent and approaches the portion on the vehicle cabin exterior side of the opening edge of the guide mouth 52 when the door 6 is near the open position. Therefore, the opening edge employs a shape that inhibits the opening edge from contacting the outer sheathing member 20 and also inhibits the opening edge from catching on the outer sheathing member 20 even when contact is made. Moreover, the bend radius of the outer sheathing member 20 is treated as largely the same as a distance from the rotation axis of the door hinge 5 to the attachment member 30 and the guide mouth 52.

The accommodator 40 includes a first wall 40a and a second wall 40b opposite each other on either side of the accommodating space. In addition, the accommodating mouth 46 is formed on a first end of the first wall 40a and the second wall 40b, and the extraction mouth 42 is formed on a second end (see Fig. 5). In a planar view, the accommodator 40 is formed so as to be capable of accommodating wire harness WH such that the surplus length of the wire harness WH is absorbed by bending the wire harness WH between a first route R1 and a second route R2, the second route R2 being expanded so as to separate from the first route R1, the wire harness WH extending from the second end of the outer sheathing member 20. Herein, the first route R1 is a route along the first wall 40a and the second route is a route along the second wall 40b. In the description that follows, the first route R1 and the second route R2 are described as having the shapes of the first wall 40a and the second wall 40b.

In a front view (view of the vehicle cabin exterior from the vehicle cabin interior in a mode where the protector P is attached to the door 6), the first wall 40a is formed in a straight line or a gently curved line (herein, the curved line) so as to link the accommodating mouth 46 and the extraction mouth 42. Meanwhile, in the front view, the second wall 40b is formed in a shape expanded such that a middle portion of the second wall 40b separates from the first wall 40a. More specifically, the second wall 40b is provided on an outer peripheral side (protruding side of the curve) with respect to the first wall 40a having the curved line shape in the front view. Herein, the accommodator 40 is formed in a shape in which the accommodating mouth 46 and the extraction mouth 42 are substantially orthogonal to each other. In addition, the accommodator 40 is formed in a shape expanding so as to protrude in a direction separating the second wall 40b from the extraction mouth 42. Herein, the expanding portion of the accommodator 40 is called a swell 48. The swell 48 projects and expands in a through direction of the extraction mouth 42 so as to separate from the extraction mouth 42 farther than from the accommodating mouth 46. In addition, the accommodator 40 is formed in a shape having a portion of the second wall 40b opposite the accommodating mouth 46 expanding slightly in a direction separating from the accommodating mouth 46, as well.

Specifically, the second route R2 is defined to be longer than the first route R1 and the surplus length of the wire harness WH is absorbed by the wire harness WH being bent and deformed away from the first route R1 to pass through the second route R2.

When described in association with the act of opening and closing the door 6, in the open state of the door 6, the second end of the outer sheathing member 20 is positioned on the first end side of the guide 50 and the wire harness WH passes through the first route R1 near the first wall 40a and is accommodated in the accommodating space, the wire harness WH extending from the second end of the outer sheathing 20.

When the door 6 is closed from the open position, the outer sheathing member 20 is displaced by advancing into the guide 50 and the wire harness WH is pushed into the accommodating space to approach the second wall 40b, the wire harness WH extending from the second end of the guide 50. More specifically, the wire harness WH contacts the second wall 40b from a portion on the extraction mouth 42 side to a portion opposite the accommodating mouth 46 and, due to rigidity of the wire harness WH, the wire harness WH steadily approaches the portion opposite the extraction mouth 42 until making contact. Thereby, the wire harness WH is partially installed in the swell 48 and is passed through the second route R2 along the second wall 40b configuring the swell 48 to be accommodated in the accommodating space. Specifically, as compared to the open state of the door 6, the portion of the wire harness WH accommodated in the accommodating space becomes longer.

During the act of opening the door, in contrast to the act of closing the door, the wire harness WH is drawn out from within the accommodating space toward the guide 50 and the portion of the wire harness WH inside displaces from the second route R2 to the first route R1.

The second wall 40b configuring the swell 48 is preferably formed with as gentle a curvature diameter as possible, as viewed from a front view. Specifically, the wire harness WH accommodated in the accommodating space should be bent more gently by the configuration running through the second route R2 and effects of a localized force should be inhibited.

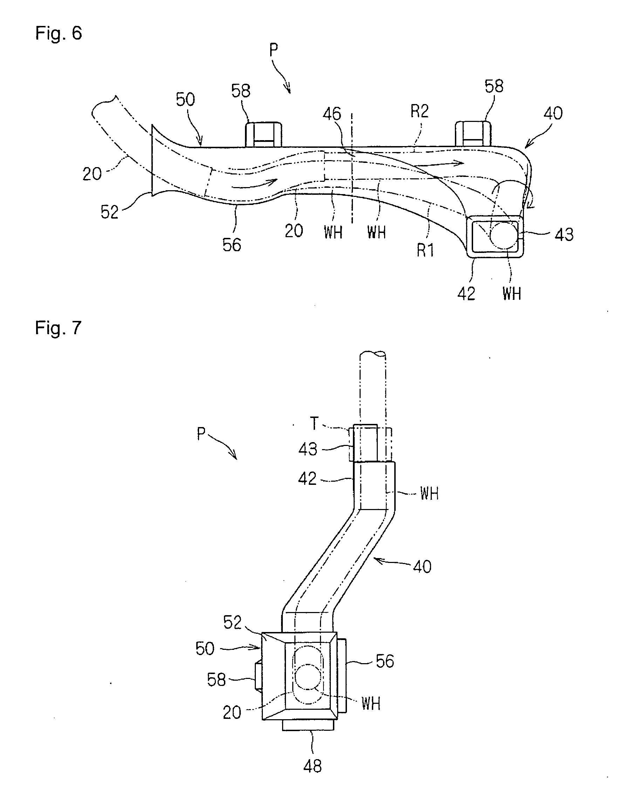

The accommodator 40 is formed such that the accommodating mouth 46 and the extraction mouth 42 occupy a positional relationship offset in an interior-exterior direction of the door 6, the protector P being installed in the door 6 (see Figs. 6 and 7). Herein, the direction in which the accommodating mouth 46 and the extraction mouth 42 are offset is a direction toward an interior of the protector P. Specifically, this direction is a direction linking the walls adjacent to the first wall 40a and the second wall 40b. Moreover, this direction is the interior-exterior direction of the door 6, the protector P being installed in the door 6. Thereby, the wire harness WH accommodated within the accommodating space of the accommodator 40 is accommodated so as to be deformable in three dimensions.

More specifically, a portion of the accommodator 40 on the second end of the guide 50 is formed so as to extend on an elongation line of the guide 50. A portion spanning the accommodator 40 from this portion to just before the extraction mouth 42 is formed so as to incline to one side in the inward direction (herein, toward the vehicle cabin interior side of the door 6) toward the extraction mouth 42. Specifically, in the accommodator 40, the wire harness WH is bent toward the extraction mouth 42 so as to be accommodated, the extraction mouth 42 orthogonal to the through direction of the accommodating mouth 46. In addition, a midway portion of the wire harness WH is sloped in the inward direction so as to be accommodated.

Herein, accompanying the act of advancing and withdrawing the outer sheathing member 20, when the wire harness WH is bending deformed two dimensionally, bending stress is concentrated and acts on portions of the wire harness WH bent in each act of opening and closing the door 6.

In contrast, when the accommodator 40 is formed such that the wire harness WH is capable of deforming three-dimensionally, as in the present embodiment, the wire harness WH is deformed in a torsional direction in addition to the bending deformation. Specifically, the ways in which stress acts on the wire harness WH can be dispersed. Moreover, the torsional direction deformation occurs even in a portion beside a bending deformation portion. Specifically, a range on the wire harness WH where the stress accompanying deformation acts can be dispersed (widened).

More specifically, the wire harness WH inserted into the accommodator 40 through the accommodating mouth 46 is accommodated so as to extend (including cases where the wire harness WH is sloped) in a direction substantially orthogonal to the through direction of the accommodating mouth 46. The wire harness WH is accommodated within the accommodator 40 in a state where this portion is bent in the inward direction of the accommodator 40. In addition, when the wire harness WH is pushed into the accommodator 40 and displaces from the first route R1 toward the second route R2, the portion pushed in through the accommodating mouth 46 displaces around an axis with respect to the portion extending in a direction substantially orthogonal to the through direction of the accommodating mouth 46 at a position offset in the inward direction from the accommodating mouth 46. Therefore, a force acts around the axis (in the torsional direction) on a portion extending in the direction substantially orthogonal to the through direction of the accommodating mouth 46 and on portions on both sides of the extension direction, thus torsion-deforming the portions.

In the present embodiment, as described above, the accommodator 40 is formed such that the through direction of the extraction mouth 42 is substantially orthogonal to the through direction of the accommodating mouth 46 (i.e., the insertion/guiding direction of the guide 50; see Fig. 5). Therefore, a direction in which the wire harness WH is pushed into the accommodating space and a direction in which the wire harness WH is drawn out from the accommodating space are substantially orthogonal. Thereby, torsion deformation becomes likely to occur at a portion of the wire harness WH extending in the through direction of the extraction mouth 42.

Herein, the swell 48 is formed by expanding chiefly at a portion opposite the extraction mouth 42 so as to project in a direction separating from the extraction mouth 42. Specifically, due to the shape of the swell 48, a measurement of a portion of the accommodator 40 extending in the through direction of the extraction mouth 42 becomes longer (see Fig. 5). Therefore, as the wire harness WH approaches the second route R2 from the first route R1, the extension measurement of the wire harness WH in the through direction of the extraction mouth 42 can be made longer and the portion which torsion-deforms can be dispersed over a wider range. Moreover, as compared to a case where the swell is formed by expanding in a direction separating from the accommodating mouth 46 at a portion opposite the accommodating mouth 46, portions extending further in the through direction of the extraction mouth 42 can be made longer.

A door-internal positioner 43 is formed on the extraction mouth 42 of the accommodator 40, the door-internal positioner 43 having a shape partially extending the opening edge of the extraction mouth 42. Herein, the door-internal positioner 43 extends in substantially an "L" shape (as viewed in cross-section) from a portion of the extraction mouth 42 including part of the second wall 40b. In addition, in a state where the wire harness WH drawn out through the extraction mouth 42 contacts an internal side of the door-internal positioner 43, the wire harness WH can be positioned within the door 6 by being fixated together with the door-internal positioner 43 by tightening with the wound tape T or with a zip tie. In addition, when opening and closing the door 6, even when the wire harness WH on the vehicle body 2 side advances and withdraws within the accommodator 40, an occurrence of stretching or slackening with respect to the wire harness WH routed within the door 6 can be inhibited.

Alternatively, a configuration in which the wire harness WH is fixated to the accommodator 40 can employ a configuration capable of elastically deforming a plurality of claws toward an interior of a diameter direction by engaging an outer engagement member around an exterior of an annular member that includes the plurality of claws capable of elastic deformation toward the interior of the diameter direction. Moreover, the annular member may be fixated to the extraction mouth 42. Specifically, in a state where the wire harness WH is inserted through the annular member, by engaging the outer engagement member around the exterior of the annular member, the wire harness WH can be fixated with respect to the accommodator 40.

The protector P described above can, for example, employ a configuration uniting a recessed member and a lid member. In Figs. 1, 2, and 5, the protector P is shown without the lid member. In Figs. 4, 6, and 7, the protector P is shown with the recessed member and the lid member combined. In addition, the protector P can be obtained by injection molding the recessed member and the lid member by filling metal molds for each with a resin material, then uniting the recessed member with the lid member. The recessed member and the lid member should be formed so as to be capable of maintaining the united state. For example, a configuration should be used in which a plurality of tongues or latches are formed on the recessed member and the lid member, respectively, and each of the tongues and latches are latched by bringing the recessed member and the lid member together. As the tongues and latches, a combination of latches and tongues can be employed, the latches having a wall shape provided at intervals on an outer surface of the protector P and the tongues having an insertion tab capable of being inserted between the outer surface of the protector P and the latch as well as a projection projecting outward from a forefront end of the insertion tab. Specifically, the configuration latches when the projection on the tongue contacts a terminal edge of the latch due to the insertion tab of the tongue being inserted between the outer surface of the protector P and the latch.

However, the protector P may also be configured so as to be formed in an overall recessed shape and to have an opening thereof sealed by the trim 8. The accommodator 40 and the guide 50 are not limited to being formed as a single protector P. The accommodator 40 may be provided separately from the guide 50 at the second end of the guide 50 and the outer sheathing member 20 may be guided toward the accommodator 40 by the guide 50. Moreover, the protector P may have a shape that includes only the accommodator 40. For example, instead of the guide 50, the door 6 may be formed with a structure capable of guiding the outer sheathing member 20 between the inner door panel 7 and the trim 8 toward the accommodator 40, the accommodator 40 serving as the protector P installed within the door 6.

The protector P is installed within the recessed portion 7h formed in the inner door panel 7. More specifically, the protector P is formed capable of installation in the recessed portion 7h from one direction (herein, through the opening on the vehicle cabin interior side of the recessed portion 7h, from the vehicle cabin interior side toward the vehicle cabin exterior).

In addition, the protector P is installed oriented such that the guide 50 extends along the front-back direction of the door 6 and is positioned forward of the accommodator 40, and such that the extraction mouth 42 faces upward on the door 6. The attachment position of the protector P is described by a relationship with an attachment configuration for the attachment member 30 with respect to the vehicle body 2. The attachment member 30 and the protector P are formed so as to be capable of attachment to the vehicle body 2 or so as to be capable of installation within the door 6, respectively, such that the outer sheathing member 20 bridges below the open regulator 3. Herein, the protector P is capable of installation within the door 6 such that the guide mouth 52 of the guide 50 is positioned below the door-side connector of the open regulator 3.

Specifically, the recessed portion 7h is formed in a recessed shape having an accommodating space capable of fully or partially accommodating the protector P in the orientation and position described above. In addition, the guide mouth 52 of the guide 50 is exposed to an exterior of the door 6 through the opening of the recessed portion 7h forward on the door 6. Moreover, the door-side connector of the open regulator 3 is a fixative portion of the case with respect to the door 6 (inner door panel 7). In addition, the attachment member 30 is attached to the vehicle body 2 so as to be positioned directly below the vehicle body connector. Therefore, the outer sheathing member 20 is positioned below the open regulator 3 between the vehicle body 2 and the door 6, the outer sheathing member 20 bridging the space between the attachment member 30 and the guide 50.

Herein, an attachment structure of the protector P attaching to the door 6 is described. The protector P is formed so as to be capable of attaching in the attachment orientation and position described above with respect to the inner door panel 7 on the door 6 by being pressed onto the inner door panel 7 toward the vehicle cabin exterior. Herein, the protector P includes an engagement portion 58 capable of engaging with an aperture formed in the inner door panel 7 (a base of the recessed portion 7h). For example, the engagement portion 58 can employ a configuration including a base shaft projecting from the exterior surface of the protector P and a tongue provided so as to widen from a foremost end of the base shaft toward an outer periphery and capable of elastic deformation toward an inner periphery. Specifically, by inserting the engagement portion 58 into the aperture from the vehicle cabin interior side toward the vehicle cabin exterior, the tongue contacts a peripheral edge of the aperture and elastically deforms toward the inner periphery. When the engagement portion 58 passes the aperture, the engagement portion 58 is elastically restored toward the outer periphery and latches from behind with the peripheral edge of the aperture. Alternatively, the protector P may also be fixated to the inner door panel 7 by screwing and the like. Moreover, even in such a case, the protector P should be capable of installation in the inner door panel 7 (recessed portion 7h) from the vehicle cabin interior side toward the vehicle cabin exterior.

As described above, the protector P is formed in substantially an overall "L" shape. Therefore, a space is created toward an interior of the protector P (i.e., above the guide 50 and forward of the accommodator 40 in a state installed in the door 6), the space bounded on two sides by the protector P. Herein, the protector P is installed in the recessed portion 7h in an orientation where the guide mouth 52 of the guide 50 is positioned below a fixated position of the case of the open regulator 3 and where the extraction mouth 42 faces upward on the vehicle body 2. Specifically, the protector P is formed to be capable of installation in the door 6 in a configuration bounding the open regulator 3 on two sides. Specifically, the arm of the open regulator 3 advances and withdraws within the space bounded on two sides by the protector P. Thereby, the space within the door 6 can be effectively utilized, a plurality of electrical devices being located within the door 6.

However, when the protector P (accommodator 40) has a configuration capable of absorbing the surplus length of the wire harness WH so as to disperse the stress applied to the wire harness WH by deforming the wire harness WH three-dimensionally, the protector P is not limited to the above-described configuration. Specifically, the accommodator 40 may offset the accommodating mouth 46 and the extraction mouth 42 in the inward direction and may be capable of accommodating the wire harness WH such that the wire harness WH is extended in a direction substantially orthogonal to the through direction of the accommodating mouth 46 (as viewed from the front). For example, the accommodator may have a shape in which the swell 48 expands in a direction separating from the accommodating mouth 46. In addition, the accommodator is not limited to a shape in which the through directions of the accommodating mouth 46 and the extraction mouth 42 are substantially orthogonal to each other, but may have a shape in which the through directions are substantially parallel or intersected. For example, the accommodator may be formed in substantially a "D" shape having a first wall having a substantially straight-line shape as viewed from the front and a second wall expanding so as to separate from the first wall.

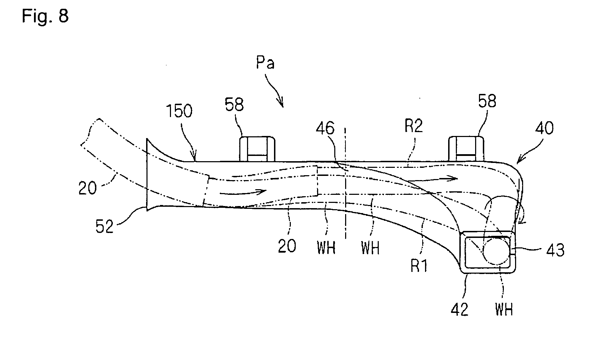

As shown in Fig. 8, a protector Pa may be employed having a guide 150 which omits the clearance 56 (having the guide 150 formed in a substantially straight-line shape at that portion as viewed in a planar view). Specifically, according to the attachment configuration of the door 6 on the vehicle body 2, the outer sheathing member 20 advancing and withdrawin through the guide mouth 52 may exert a comparatively weak force toward the vehicle cabin interior. In this way, in a case where the noise of the outer sheathing member 20 rubbing against the interior of the guide 150 is not noticeable, the clearance 56 may be omitted.

The wire harness cable routing structure 10 described above may modularize and assemble the wire harness WH routed from the vehicle body 2 into the door 6; the outer sheathing member 20; the attachment member 30; and the protector P prior to installation in the vehicle. Specifically, the wire harness WH is installed within the outer sheathing member 20 and the attachment member 30 is mounted to the first end of the outer sheathing member 20. Then, the second end of the outer sheathing member 20 is installed within the guide 50 of the protector P, and the wire harness WH extending from the second end of the outer sheathing member 20 is installed within the accommodator 40 and fixated to the door-internal positioner 43.

In addition, the attachment member 30 and the protector P are not limited to being formed so as to be capable of attaching the outer sheathing member 20 to a position below the open regulator 3. For example, the attachment member 30 and the protector P may also be capable of attaching the outer sheathing member 20 above or to the side of the open regulator 3.

To this point, the wire harness cable routing structure 10 has been described using an example applied between the vehicle body 2 and the door 6 (as a front side door). However, the wire harness cable routing structure 10 can also be applied to a rear side door. In such a case, the wire harness WH is bridged between a center pillar (pillar between the front side door and the rear side door) and the rear side door. Specifically, an aperture is formed in the center pillar and the attachment member 30 is attached to the aperture.

According to the wire harness cable routing structure 10 and the protector P having the above configuration, the accommodator 40 is formed so as to accommodate the wire harness WH, routed between the vehicle body 2 and the door 6, such that the surplus length of the wire harness WH can be absorbed by bending between the first route R1 and the second route R2, the second route R2 having a shape expanding so as to separate from the first route R1. Therefore, the wire harness WH advancing and withdrawing within the door 6 accompanying the act of opening and closing the door 6 can smoothly absorb the surplus length. In addition, as compared to a case where the wire harness WH is wound to absorb the surplus length, the surplus length can be absorbed without the wire harness WH crossing within the accommodator 40, and thus the surplus length can be absorbed more smoothly.

The accommodator 40 is formed such that the accommodating mouth 46 and the extraction mouth 42 occupy a positional relationship offset in the internal-external direction of the door 6, the accommodating mouth 46 and the extraction mouth 42 being installed in the door 6. Therefore, when the surplus length is absorbed, the wire harness WH accommodated within the accommodator 40 deforms in the torsional direction in addition to the bending deformation. Thereby, the surplus length can be absorbed while dispersing the stress applied to the wire harness WH advancing and withdrawing within the door 6 during opening and closing of the door 6.

The protector P can be configured, for example, by the combination of the recessed member and the lid member formed by injection molding and the like, similar to a general protector. Therefore, an increase in the number of components can be inhibited and additional processes and equipment can be omitted.

The accommodator 40 is formed in a shape where the accommodating mouth 46 and the extraction mouth 42 are orthogonal to each other. Therefore, when the wire harness WH advances and withdraws within the accommodator 40 through the accommodating mouth 46, torsion deformation is facilitated for the portion of the wire harness WH extending in the direction substantially orthogonal to the direction of advance and withdrawal from the extraction mouth 42. In addition, the second wall 40b is formed in a shape expanding so as to protrude in a direction separating from the extraction mouth 42. Thereby, a greater length can be ensured for the portion of the wire harness WH extending in the through direction of the extraction mouth 42 and a range of deformation in the torsional direction can be broadened. Therefore, the stress applied to the wire harness WH can be dispersed over a wider range.

The guide 50 is formed so as to be capable of guiding the outer sheathing member 20 toward the accommodator 40. Therefore, the outer sheathing member 20 can be guided more smoothly toward the accommodator 40. The guide 50 includes the clearance 56 on the first end of the guide 50, the clearance 56 expanding in the direction of advance for the outer sheathing member 20 accompanying the act of closing the door 6. Therefore, the force with which the outer sheathing member 20 rubs against the interior surface of the guide 50 can be inhibited and can contribute to inhibition of noise. In addition, the outer sheathing member 20 can be advanced and withdrawn more smoothly.

The first end of the guide 50 is formed so as to widen toward the attachment member 30 at least in the open state of the door 6. Therefore, in the act of opening and closing the door, the wire harness WH can be inserted and guided more smoothly within the guide 50.

The attachment member 30 is configured so as to position the first end of the outer sheathing member 20 (sheathing the exterior of the wire harness WH) using the vehicle body engagement portion 38, then engage with the aperture 2h simply by pressing in the insertion direction S. Therefore, the wire harness WH can be easily routed to the vehicle body 2.

The wire harness cable routing structure 10 routes the wire harness WH further to the vehicle cabin interior than the weather strip 6w. Therefore, members for waterproofing such as a grommet can be omitted and a reduction in the number of components and number of assembly steps can be achieved, as well as achieving corresponding cost reduction and improved work efficiency. Moreover, according to the configuration not using the grommet, preparation of a cover to prevent deformation of the grommet during transport and packing can be omitted, contributing to cost reduction. Moreover, this also contributes to theft prevention. As compared to a case where the wire harness WH is attached to the door 6 with the grommet, the work of spreading the grommet when passing the wire harness WH therethrough can also be omitted.

The wire harness cable routing structure 10 routes the wire harness WH between the inner door panel 7 and the trim 8. Therefore, time and effort to route the wire harness WH by inserting the wire harness WH through a through-hole is eliminated and assembly work can be performed in an exposed work space. Improvement in ease of assembly and efficiency of work can thus be achieved.

The wire harness cable routing structure 10 as described above has been described in detail. However, the above description is in all respects illustrative and the present invention is not limited to thereto. Numerous modifications not described above can be understood to be conceivable without deviating from the scope of the present invention.

### DESCRIPTION OF REFERENCE NUMERALS

- 2: Vehicle body
- 6: Door
- 10: Wire harness cable routing structure
- 20: Outer sheathing member
- 30: Attachment member
- 40: Accommodator
- 42: Extraction mouth
- 46: Accommodating mouth
- 48: Swell
- 50: Guide
- 52: Guide mouth
- 56: Clearance
- P: Protector
- R1: First route
- R2: Second route
- WH: Wire harness

## Claims

1. A wire harness cable routing structure routing a wire harness between a vehicle body and a door, the wire harness cable routing structure comprising:
the wire harness;
an outer sheathing member sheathing a portion of the wire harness including a portion bridging a space between the vehicle body and the door;
an attachment member attachable to the vehicle body, a first end of the outer sheathing member being fixated to the attachment member; and
an accommodator capable of installation within the door and capable of accommodating the wire harness extending out from a second end of the outer sheathing member such that a surplus length of the wire harness can be absorbed by bending between a first route and a second route, the second route expanded so as to separate from the first route,
the accommodator comprising:
an accommodating mouth allowing the wire harness to be inserted into an interior of the accommodator such that the wire harness can be advanced and withdrawn; and
an extraction mouth allowing the accommodated wire harness to be extracted outward, wherein
the accommodator is formed such that the accommodating mouth and the extraction mouth occupy a positional relationship offset in an interior-exterior direction of the door, the accommodating mouth and the extraction mouth being installed in the door.

2. The wire harness cable routing structure according to claim 1, wherein
the accommodator is formed in a shape where the accommodating mouth and the extraction mouth are orthogonal to each other and the accommodator includes a wall expanding so as to protrude away from the extraction mouth, and wherein
the wire harness is accommodated along the wall on the second route.

3. The wire harness cable routing structure according to claim 1, further comprising:
a guide formed in a trench shape or a tubular shape capable of installation within the door and extending such that the wire harness can be inserted into and guided through the guide toward the accommodator,
the guide comprising, on a first end, a clearance expanding in a direction of advance of the outer sheathing member accompanying an act of closing the door.

4. The wire harness cable routing structure according to claim 1, further comprising:
the guide having the trench shape or the tubular shape capable of installation within the door and extending such that the wire harness can be inserted into and guided through the guide toward the accommodator, wherein
the first end of the guide is formed so as to widen toward the attachment member in at least the open state of the door.

5. A protector accommodating a wire harness such that a surplus length of the wire harness can be absorbed, wherein
the protector can accommodate the wire harness such that the surplus length of the wire harness can be absorbed by bending between a first route and a second route, the second route expanded so as to separate from the first route,
the protector comprises:
an accommodating mouth allowing the wire harness to be inserted into an interior of the protector such that the wire harness can be advanced and withdrawn; and
an extraction mouth allowing the accommodated wire harness to be extracted outward, and
the protector is formed such that the accommodating mouth and the extraction mouth occupy a positional relationship offset in an inward direction of a door.
